# EUROPÄISCHE PATENTSCHRIFT

(11) **EP 3 065 242 B1**
(45) Veröffentlichungstag und Bekanntmachung des Hinweises auf die Patenterteilung: **12.07.2017**
(21) Anmeldenummer: 16154984.5
(22) Anmeldetag: 10.02.2016
(51) Int. Cl.: H02G 5/02

(54) **STROMSCHIENENHALTER**
BUSBAR SUPPORT
SUPPORT DE BARRES OMNIBUS

(30) Priorität: 02.03.2015 DE 102015102959
(43) Veröffentlichungstag der Anmeldung: 07.09.2016
(73) Patentinhaber: Mangelberger, Oliver, 91126 Schwabach (DE)
(72) Erfinder: Mangelberger, Oliver, 91126 Schwabach (DE)
(74) Vertreter: Dr. Gassner & Partner mbB

(56) Entgegenhaltungen:
- US-A- 5 281 762
- US-A1- 2009 173 519

## Beschreibung

Die Erfindung betrifft einen Stromschienenhalter, der an einer Tragschiene oder an einer Tragkonstruktion befestigbar ist und Ausnehmungen für Stromschienen aufweist.

In der Elektroinstallation werden Schaltschränke eingesetzt, die eine Vielzahl elektrischer Komponenten wie Schalter, Relais oder Sicherungsautomaten aufnehmen. Der Schaltschrank weist dazu typischerweise einen aus Tragschienen und anderen Profilelementen gebildeten Rahmen auf, an dem u. a. auch Stromschienen befestigt sind. Dieser Rahmen wird auch als Tragkonstruktion bezeichnet. Zur Befestigung dienen herkömmliche Stromschienenhalter, die Durchgangsöffnungen für mehrere Stromschienen aufweisen. Ein derartiger Stromschienenhalter ist aus der US2009/0173519 A1 bekannt. Die aus einem Kunststoffmaterial hergestellten Stromschienenhalter umfassen dementsprechend Durchgangsöffnungen, deren Größe an den Querschnitt der verwendeten Stromschienen angepasst ist. Stromschienen bestehen zumeist aus Kupfer, alternativ auch aus einer Aluminiumlegierung. Herkömmliche Stromschienen, die für die spannungsführenden Leiter L1, L2 und L3 verwendet werden, können beispielsweise einen Querschnitt von 30 mm x 5 mm oder 30 mm x 10 mm aufweisen. Für den Nullleiter (N) und den Schutzleiter (PE) kann beispielsweise auch eine Stromschiene mit dem Querschnitt 12 mm x 5 mm eingesetzt werden.

In der Praxis werden daher zumindest zwei unterschiedlich große Stromschienenhalter benötigt, gegebenenfalls kann für die Stromschienen des N- und de PE-Leiters eine weitere dritte Halterung eingesetzt werden. Da die herkömmlichen Stromschienen Durchgangsöffnungen für die Stromschienen aufweisen, werden zusätzliche Abdeckungen benötigt, die an beiden freien Enden der Stromschienen angebracht werden, um das Berühren der spannungsführenden Stromschienen zu vermeiden.

Es wird angestrebt, die bisher übliche manuelle Montage von Schaltanlagen und Schaltschränken durch eine automatisierte Montage mittels eines Robotergreifers zu ersetzen. Versuche haben jedoch gezeigt, dass die herkömmlichen Stromschienenhalter für eine automatische Montage nicht geeignet sind.

Der Erfindung liegt daher die Aufgabe zugrunde, einen Stromschienenhalter anzugeben, der für die automatische Montage geeignet ist.

Zur Lösung dieser Aufgabe ist bei einem Stromschienenhalter der eingangs genannten Art erfindungsgemäß vorgesehen, dass er ein Unterteil und ein Oberteil aufweist, die unter Bildung von Ausnehmungen für Stromschienen miteinander verbindbar sind, wobei das Unterteil an zwei entgegengesetzten Seiten elastisch verformbare Halterabschnitte aufweist, die einerseits in Öffnungen der Tragschiene einsteckbar sind und diese im eingesteckten Zustand kraft- und/oder formschlüssig hintergreifen und die andererseits in Öffnungen des Oberteils einsteckbar sind, wobei das Oberteil derart geformt ist, dass es entweder mit einer ersten Seite oder mit einer zweiten Seite auf das Unterteil aufsteckbar ist, wodurch entweder als Durchgangsöffnungen für Stromschienen ausgebildete Ausnehmungen oder Endhalter zum seitlichen Abdecken von Stromschienen gebildet werden.

Der erfindungsgemäße Stromschienenhalter löst gleichzeitig mehrere Probleme, die sich bei der automatischen Montage stellen. Der erfindungsgemäße Stromschienenhalter weist elastisch verformbare Halteabschnitte auf, die in Öffnungen der Tragschiene oder einer anderen Tragkonstruktion eingesteckt werden können. Die Halteabschnitte wirken somit wie eine Schnapp- oder Klippsverbindung, so dass der Stromschienenhalter lediglich durch eine lineare Bewegung an einem anderen Bauteil, insbesondere an einer Tragschiene oder einer Tragkonstruktion, befestigt werden kann. Der Stromschienenhalter kann somit von einem Robotergreifer aufgenommen und mit seinen Halteabschnitten in die Öffnungen der Tragschiene eingesetzt werden. Nach dem Passieren der Öffnungen der Tragschiene oder der Tragkonstruktion bewegen sich die verformten Halteabschnitte wieder elastisch in ihren Ausgangszustand, wobei die Halteabschnitte die Öffnungen der Tragschiene hintergreifen. Dadurch wird das Unterteil an der Tragschiene arretiert und befestigt. Der erfindungsgemäße Stromschienenhalter weist den Vorteil auf, dass er mit lediglich einem Robotergreifer automatisch montiert werden kann.

Da der erfindungsgemäße Stromschienenhalter auch an seiner entgegengesetzten Seite Halteabschnitte aufweist, kann auch das Oberteil auf die gleiche Weise befestigt werden. Das Oberteil weist dazu entsprechend ausgebildete Öffnungen auf, die von den Halteabschnitten durchsetzt werden können, wodurch das Oberteil und das Unterteil kraft- und/oder formschlüssig miteinander verbunden werden. Es ist möglich, zunächst das Unterteil an der Tragschiene oder der Tragkonstruktion zu befestigen und anschließend das Oberteil auf das Unterteil aufzusetzen. Alternativ können auch das Unterteil und das Oberteil in einem ersten Montageschritt miteinander verbunden werden, daraufhin wird der das Unterteil und das Oberteil umfassende Stromschienenhalter an der Tragschiene mittels eines Robotergreifers montiert.

Der erfindungsgemäße Stromschienenhalter weist des Weiteren den Vorteil auf, dass das Oberteil entweder mit einer ersten Seite oder mit einer zweiten Seite auf das Unterteil aufsteckbar ist. Bei der ersten Variante entstehen dadurch Ausnehmungen für Stromschienen, die als Durchgangsöffnungen ausgebildet sind. Mithin kann ein erfindungsgemäßer Stromschienenhalter so an einer Tragschiene oder einer Tragkonstruktion positioniert werden, dass er von Stromschienen durchsetzt wird. Alternativ kann der erfindungsgemäße Stromschienenhalter mit einer zweiten Seite, vorzugweise mit der der ersten Seite gegenüberliegenden Seite auf das Unterteil aufgesteckt werden, wodurch Endhalter gebildet werden, die Endabschnitte der Stromschienen seitlich abdecken. Dadurch entfällt das Erfordernis des Anbringens einer separaten Endabdeckung oder dergleichen, die erforderlich ist, um ein versehentliches Berühren der spannungsführenden Stromschienen zu vermeiden.

Der erfindungsgemäße Stromschienenhalter weist somit den Vorteil auf, dass er die Montage von Stromschienen mit unterschiedlichen Querschnitten ermöglicht, daneben kann der Stromschienenhalter als Endhalter dienen, der gleichzeitig eine seitliche Abdeckung für die Stromschienen bildet oder der Stromschienenhalter kann durch einfaches Umdrehen des Oberteils Durchgangsöffnungen für Stromschienen bereitstellen. Ein besonders großer Vorteil ist darin zu sehen, dass lediglich ein einziger Stromschienenhalter benötigt wird, der bis zu fünf unterschiedliche Bauteile ersetzt. Dadurch wird die Bereitstellung erheblich vereinfacht und beispielsweise ein Greiferwechsel bei einer automatisierten Montage vermieden.

Bei dem erfindungsgemäßen Stromschienenhalter wird es bevorzugt, dass ein elastisch verformbarer Halteabschnitt zwei in entgegengesetzte Richtungen abstehende Zungen aufweist. Die an dem Unterteil ausgebildeten Zungen sind schräg ausgebildet bzw. verjüngen sich ausgehend von einem Grundkörper des Unterteils. Beim Einsetzen des Halteabschnitts in eine Öffnung einer Tragschiene oder des Oberteils erleichtert die sich verjüngende, schräge Form der Zungen das Einsetzen in die entsprechende Öffnung. Beim Einsetzen werden die elastisch verformbaren Halteabschnitte zusammengedrückt, vorzugweise zueinander in Richtung eines mittleren Abschnitts, an dem die beiden Zungen angebracht sind, so dass die entsprechende Öffnung der Tragschiene oder des Oberteils passiert werden kann. Nach dem Passieren der Öffnung bewegen sich die verformten Zungen wieder elastisch in ihre Ausgangsform zurück, so dass sie die entsprechende Öffnung hintergreifen. Da die Endabschnitte der Zungen dann an der Tragschiene oder an einer entsprechenden Fläche des Oberteils anliegen, ist das Unterteil fest mit dem jeweils anderen Bauteil verbunden. Eine Demontage ist dann nur noch möglich, indem die beiden in entgegengesetzte Richtungen abstehenden Zungen zusammengedrückt werden. Vorzugweise sind die Zungen der elastisch verformbaren Halteabschnitte an beiden Seiten des Unterteils identisch bzw. symmetrisch ausgebildet. Ein Unterteil kann beispielsweise an beiden Seiten jeweils zwei voneinander beabstandete, abstehende Zungen aufweisen. Allerdings sind auch andere Varianten mit drei oder vier nebeneinander beabstandet angeordneten Zungen möglich.

Es liegt auch im Rahmen der Erfindung, dass das Unterteil des erfindungsgemäßen Stromschienenhalters entweder mit der ersten Seite oder mit der zweiten Seite in eine Tragschiene einsteckbar ist, wobei beim Einstecken der ersten Seite eine Ausnehmung für eine Stromschiene mit einer ersten Höhe und beim Einstecken der zweiten Seite eine Ausnehmung mit einer zweiten Höhe gebildet ist. Das Unterteil ist somit nicht exakt symmetrisch ausgebildet, vielmehr weist das Unterteil an einer Seite Ausnehmungen einer ersten Höhe und an der entgegengesetzten Seite Ausnehmungen einer zweiten Höhe auf. Durch Drehen des Unterteils um 180° um seine Längsachse kann es jeweils in die andere Position zur Montage überführt werden. Die erste Höhe kann beispielsweise 10 mm betragen, die zweite Höhe beispielsweise 5 mm. Im ersten Fall können somit Stromschienen mit einem Querschnitt von beispielsweise 30 mm x 10 mm montiert werden, im zweiten Fall Stromschienen mit dem Querschnitt 30 mm x 5 mm. Diese Größenangaben sind lediglich als Beispiele zu verstehen, die Breite und Höhe der Ausnehmungen kann nach Bedarf angepasst werden. Dabei ist es besonders vorteilhaft, dass unterschiedliche Stromschienen montiert werden können, ohne dass dafür verschiedene Stromschienenhalter oder Unterteile benötigt werden. Vielmehr ergibt sich die gewünschte Ausnehmung durch entsprechendes Ausrichten und Positionieren des Unterteils.

Eine noch bessere Funktionalität des erfindungsgemäßen Stromschienenhalters ergibt sich, wenn das Oberteil und/oder das Unterteil so geformt sind, dass weitere Ausnehmungen für Stromschienen gebildet sind, die senkrecht zu den bereits erwähnten Ausnehmungen angeordnet sind. Die bereits erwähnten Ausnehmungen können vorzugsweise parallel zur Längsachse des Stromschienenhalters ausgerichtet sein. Die weiteren Ausnehmungen können senkrecht dazu ausgerichtet sein, vorzugsweise schließen sich die weiteren Ausnehmungen an die bereits erwähnten Ausnehmungen an. Das Oberteil weist an denjenigen Stellen, die den Ausnehmungen des Unterteils gegenüberliegen, ebenfalls Ausnehmungen auf, diese besitzen eine einheitliche Größe, das heißt eine einheitliche Breite und Höhe. Die Variation der sich nach der Montage ergebenden Ausnehmungen erfolgt somit durch entsprechendes Positionieren des Unterteils. Die weiteren Ausnehmungen können beispielsweise für Stromschienen der Größe 12 mm x 5 mm verwendet werden, die für den N-Leiter und den PE-Leiter benötigt werden. In dieser Konfiguration bleiben die Ausnehmungen für die Leiter L1, L2 und L3 frei. Der erfindungsgemäße Stromschienenhalter kann somit sowohl für die Leiter L1, L2 und L3 als auch alternativ für die Leiter N und PE eingesetzt werden.

Vorzugweise weist der erfindungsgemäße Stromschienenhalter wenigstens drei voneinander beabstandete Ausnehmungen für Stromschienen auf.

Mit besonderem Vorteil kann es bei dem erfindungsgemäßen Stromschienenhalter vorgesehen sein, dass das Oberteil eine Seitenfläche aufweist, die in der Konfiguration als Endhalter die Ausnehmungen für die Stromschienen abdeckt. Diese Seitenfläche ist allerdings lediglich an einer Seite des Oberteils ausgebildet. Die der Seitenfläche gegenüberliegende Seite des Oberteils ist offen, das heißt sie weist die Ausnehmungen für die Stromschienen auf. Die Stromschienen können an der offenen Seite in den Stromschienenhalter in die Ausnehmungen, die zwischen Oberteil und Unterteil gebildet sind, eingeschoben werden, bis sie von innen an die als Abdeckung dienende Seitenfläche anstoßen. Dreht man das Oberteil hingegen um eine zu seiner Längsrichtung senkrechte Achse, so werden die Durchgangsöffnungen für die Stromschienen gebildet. Dementsprechend ergibt sich der Vorteil, dass durch eine entsprechende Positionierung und Befestigung des Oberteils an dem Unterteil entweder Durchgangsöffnungen für Stromschienen gebildet werden oder dass das Oberteil als Endhalter wirkt.

Optional können bei dem erfindungsgemäßen Stromschienenhalter übereinstimmende Durchgangslöcher vorgesehen sein, die in dem Oberteil und dem Unterteil ausgebildet sind. Die Durchgangslöcher dienen zusätzlich zum Verschrauben des Stromschienenhalters mit der Tragschiene oder der Tragkonstruktion. Das Verschrauben kann automatisch erfolgen.

Um die Funktionalität des erfindungsgemäßen Stromschienenhalters weiter zu verbessern, kann es vorgesehen sein, dass das Oberteil Haltenasen zum Anbringen einer Abdeckung aufweist. Vorzugsweise sind die Haltenasen im Bereich der Endabschnitte des Stromschienenhalters ausgebildet. Die Haltenasen ermöglichen das Anbringen einer Abdeckung, insbesondere einer elastischen, dünnen Abdeckung aus einem Kunststoffmaterial.

Mit besonderem Vorteil ist es bei dem erfindungsgemäßen Stromschienenhalter vorgesehen, dass das Oberteil und/oder das Unterteil vorzugsweise an zwei gegenüberliegenden Seiten Aussparungen aufweisen, die eine Aufnahme durch einen Robotergreifer ermöglichen. Die Aussparungen sind so ausgebildet, dass ein zweiteiliger Robotergreifer so bewegt werden kann, dass das Oberteil und/oder das Unterteil durch eine Schließ- oder Greifbewegung des Robotergreifers kraft- und/oder formschlüssig aufgenommen werden kann.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: eine perspektivische Ansicht eines Unterteils eines erfindungsgemäßen Stromschienenhalters;
- Fig. 2: die andere Seite des in Fig. 1 gezeigten Unterteils;
- Fig. 3: eine perspektivische Ansicht eines erfindungsgemäßen Stromschienenhalters mit einem Oberteil und einem Unterteil;
- Fig. 4: eine perspektivische Ansicht eines an einer Tragschiene befestigten Stromschienenhalters mit Stromschienen;
- Fig. 5: eine weitere perspektivische Ansicht des in Fig. 4 gezeigten Stromschienenhalters; und
- Fig. 6: zwei Stromschienenhalter, wobei zwischen dem Oberteil und dem Unterteil einerseits eine kleine Ausnehmung und andererseits eine große Ausnehmung gebildet ist.

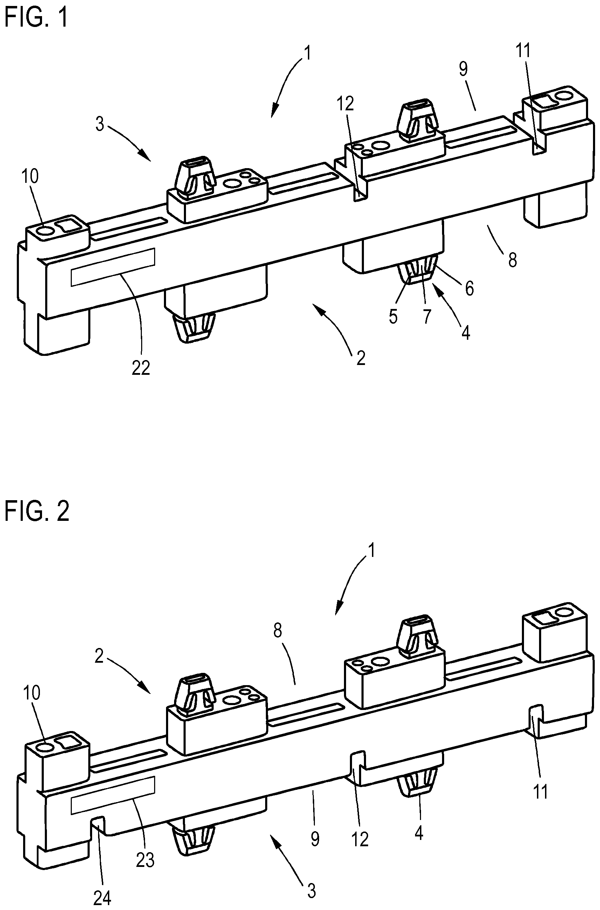

Fig. 1 ist eine perspektivische Ansicht und zeigt ein Unterteil 1, das an einer ersten Seite 2 und an einer zweiten Seite 3 elastisch verformbare Halteabschnitte 4 aufweist. In dem dargestellten Ausführungsbeispiel sind sowohl an der ersten Seite 2 als auch an der zweiten Seite 3 jeweils zwei voneinander beabstandete Halteabschnitte 4 ausgebildet, die sich von dem Unterteil 1 in entgegensetzte Richtungen nach außen erstrecken. Jeder Halteabschnitt 4 umfasst zwei in entgegengesetzte Richtungen abstehende Zungen 5, 6, die sich von einem mittleren Abschnitt 7 erstrecken. Die Zungen 5, 6 sind schräg ausgebildet und verjüngen sich in Richtung zum freien Ende des Halteabschnitts 4.

Das Unterteil 1 kann mit seinen an der ersten Seite 2 (Unterseite in Fig. 1) angeordneten Halteabschnitten 4 in Öffnungen einer Tragschiene (nicht gezeigt) eingesteckt werden. Die Form und Größe der Halteabschnitte 4, insbesondere die Form und Größe der Zungen 5, 6, ist dabei so gewählt, dass die Zungen 5, 6 beim Passieren der Öffnungen der Tragschiene elastisch verformt, das heißt zusammengedrückt werden. Im eingesetzten Zustand hintergreifen die Zungen 5, 6 der Halteabschnitte 4 die Tragkonstruktion, das heißt z. B. einen entsprechenden Abschnitt eines Tragschienenprofils und nehmen wieder ihre ursprüngliche, unverformte Form ein. Durch das Einstecken des Unterteils 1 in die Öffnungen der Tragkonstruktion wird das Unterteil 1 an der Tragkonstruktion arretiert. Die Tragkonstruktion kann eine oder mehrere Tragschienen umfassen.

Andererseits weist das Unterteil 1 an der der ersten Seite 2 entgegengesetzten zweiten Seite 3 weitere Halteabschnitte 4 auf, die ein Anbringen eines Oberteils an dem Unterteil 1 ermöglichen. Das Oberteil weist dazu entsprechende Öffnungen auf, in die die Halteabschnitte 4 des Unterteils 1 eingreifen.

In Fig. 1 erkennt man, dass an der ersten Seite 2 insgesamt drei voneinander beabstandete Ausnehmungen 8 ausgebildet sind, die eine bestimmte Breite und Höhe aufweisen. An der entgegengesetzten zweiten Seite 3 weist das Unterteil 1 ebenfalls insgesamt drei voneinander beabstandete Ausnehmungen 9 auf, die eine bestimmte Breite und eine bestimmte Höhe aufweisen. Die Breite (Erstreckung in Längsrichtung des Unterteils 1) der beiden Ausnehmungen 8, 9 ist gleich, sie unterscheiden jedoch hinsichtlich ihrer jeweiligen Höhe. In dem dargestellten Ausführungsbeispiel besitzt die Ausnehmung 8 die doppelte Höhe der Ausnehmung 9. Das Unterteil 1 kann entweder in der in Fig. 1 gezeigten Lage oder umgekehrt auf eine Tragschiene montiert werden. Von der in Fig. 1 gezeigten Lage kann das Unterteil 1 durch eine Drehung um 180° um seine Längsachse in die andere Lage überführt werden. Somit ergeben sich im montierten Zustand entweder Ausnehmungen 8 mit einem großen Querschnitt oder Ausnehmungen 9 mit einem kleinen Querschnitt für Stromschienen. Wesentlich ist dabei, dass die Ausnehmungen 8, 9 für die Stromschienen jeweils zwischen dem Unterteil 1 und einem Oberteil gebildet sind, nicht jedoch zwischen dem Unterteil 1 und der Tragschiene.

Das Unterteil 1 weist eine Reihe von Durchgangsöffnungen 10 auf, die quer zur Längsrichtung verlaufen und eine Verschraubung des Oberteils und des Unterteils 1 mit der Tragkonstruktion ermöglichen.

Fig. 2 ist eine ähnliche Ansicht wie Fig. 1 und zeigt das Unterteil 1 in einer um 180° gedrehten Position. Die zweite Seite 3 des Unterteils 1 befindet sich in der Darstellung von Fig. 2 an der Unterseite. Unter der Annahme, dass das Unterteil mit seiner zweiten Seite 3 an einer Tragkonstruktion befestigt ist, ergeben sich an der ersten Seite 2 die "großen" Ausnehmungen 8 für Stromschienen. Die Ausnehmung 8 kann als Beispiel eine Größe von 30 mm x 10 mm besitzen, die kleinen Ausnehmungen 9 können als Beispiel eine Größe von 30 mm x 5 mm besitzen.

Zusätzlich weist das Unterteil 1 weitere Ausnehmungen 11, 12, 24 für Stromschienen auf, die an die Ausnehmungen 9 angrenzen, sich senkrecht dazu erstrecken und einen rechteckigen Querschnitt aufweisen. Diese weiteren Ausnehmungen 11, 12, 24 können für den N-Leiter und den PE-Leiter, das heißt für entsprechende Stromschienen, verwendet werden. Derartige Stromschienen können beispielhaft einen Querschnitt von 5 mm x 12 mm aufweisen. Es ist auch möglich, dass das Unterteil bei anderen Ausführungen eine dritte derartige Ausnehmung aufweist. Anhand der Fig. 1 und 2 ist ersichtlich, dass beide Seiten des Unterteils 1 jeweils eine Fläche 22, 23 aufweisen, die für eine Beschriftung mittels eines Lasers vorgesehen ist. Auf den Flächen 22, 23 kann ein QR-Code, ein Barcode, eine Artikelnummer oder eine Kombination davon mittels des Lasers erzeugt werden.

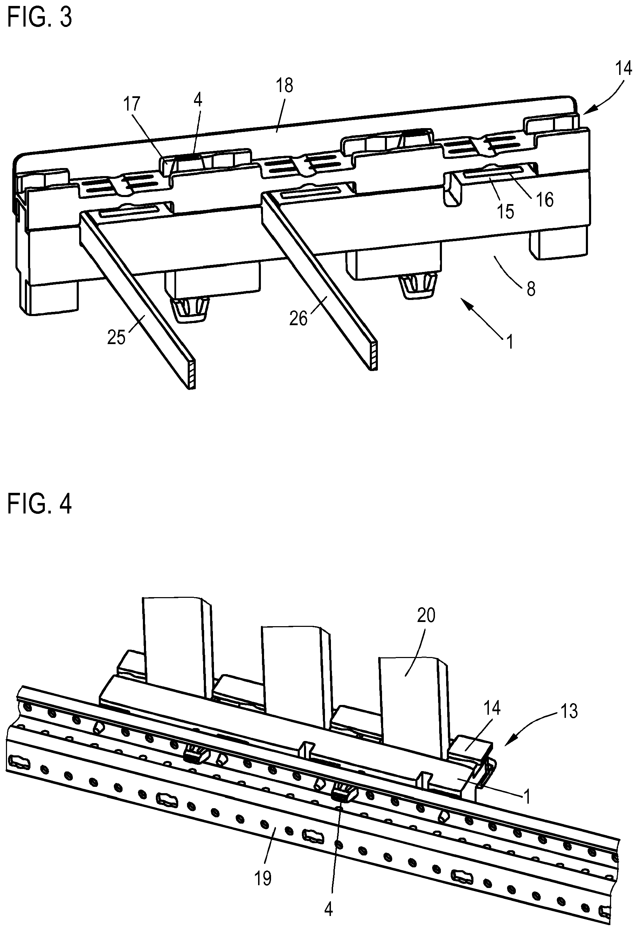

Fig. 3 zeigt einen Stromschienenhalter 13, umfassend das Unterteil 1 und ein Oberteil 14, die miteinander verbunden sind. Das Oberteil 14 weist Ausnehmungen 15 auf, die jeweils den Ausnehmungen 8 oder 9 gegenüberliegen. Zwischen dem Unterteil 1 und dem Oberteil 14 sind somit insgesamt drei Durchgangsöffnungen 16 für Stromschienen gebildet. Das Oberteil 14 weist Öffnungen 17 auf, durch die Halteabschnitte 4 des Unterteils 1 eingreifen. Das Unterteil 1 und das Oberteil 14 sind mittels der Halteabschnitte 4 kraft- und/oder formschlüssig miteinander verbunden. Die Montage erfolgt durch eine lineare Bewegung eines Robotergreifers, der das Oberteil 14 auf das Unterteil 1 aufsteckt.

In Fig. 3 erkennt man, dass das Oberteil 14 eine Seitenfläche 18 aufweist, die sich in der Ansicht von Fig. 3 hinten befindet. In der in Fig. 3 gezeigten Konfiguration sind zwischen dem Unterteil 1 und dem Oberteil 14 die als Durchgangsöffnungen ausgebildeten Ausnehmungen 15 gebildet. Das Oberteil 14 kann jedoch auch um 180° um eine sich quer zur Längsrichtung erstreckende Achse gedreht werden, so dass die Seitenfläche 18 die zwischen dem Unterteil 1 und dem Oberteil 14 gebildeten Öffnungen verschließt. In dieser Konfiguration dient das Oberteil 14 als Endhalter und deckt nach der Montage von Stromschienen diese seitlich ab. Dadurch dient das Oberteil 14 als Berührschutz, wodurch die spannungsführenden Stromschienen abgedeckt werden. In zwei der weiteren Ausnehmungen 11, 12, 24 sind Stromschienen 25, 26 eingesetzt, die für einen Nullleiter und einen Schutzleiter vorgesehen sind.

Fig. 4 zeigt den Stromschienenhalter 13, bestehend aus dem Unterteil 1 und dem damit verbundenen Oberteil 14. Das Unterteil 1 ist auf einer Tragkonstruktion 19 befestigt, wobei die Halteabschnitte 4 des Unterteils 1 entsprechende Öffnungen der Tragkonstruktion 19 durchsetzen. Das Oberteil 14 weist Durchgangsöffnungen auf, die mit denjenigen des Unterteils 1 übereinstimmen, so dass der Stromschienenhalter 13 mit der Tragkonstruktion 19 verschraubt werden kann. In den Ausnehmungen, die zwischen dem Unterteil 1 und dem Oberteil 14 gebildet sind, befinden sich drei voneinander beabstandete Stromschienen 20.

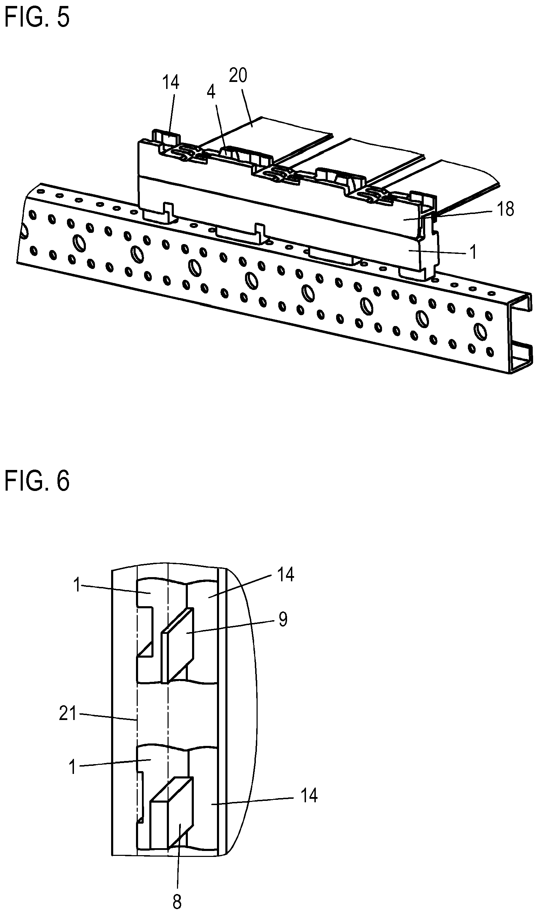

Fig. 5 zeigt den an der Tragschiene montierten Stromschienenhalter von der entgegengesetzten Seite. Man erkennt, dass das Oberteil 14 so auf das Unterteil 1 aufgesetzt ist, dass es als Endhalter dient. Die Seitenfläche 18 des Oberteils 14 ist vollständig geschlossen, so dass die freien Ende der Stromschienen 20 innen an dem Oberteil 14 anstoßen. Entsprechend ist auch dann, wenn Stromschienen in die Ausnehmungen 11, 12 mit kleinerem Durchmesser eingesetzt sind, ein Berührschutz in der Konfiguration als Endhalter gewährleistet.

Wenn das Oberteil 14 hingegen - wie in Fig. 3 gezeigt - auf dem Unterteil 1 montiert ist, sind Durchgangsöffnungen 16 gebildet, diese Konfiguration wird dann gewählt, wenn der Stromschienenhalter 13 zwischen Endhaltern auf der Tragkonstruktion 19 befestigt wird.

Das Unterteil 1 und das Oberteil 14 weisen an entgegengesetzten Seiten Aussparungen auf, die ein einfaches Aufnehmen und Greifen durch einen Robotergreifer ermöglichen. Aus Gründen der besseren Übersichtlichkeit sind diese Aussparungen in den Zeichnungen nicht dargestellt. Daneben sind auf dem Unterteil 1 und/oder auf dem Oberteil 14 Bezeichnungen für die jeweils zu montierenden Stromschienen angebracht. In dem dargestellten Ausführungsbeispiel handelt es sich dabei um die Bezeichnungen L1, L2, L3, sowie N/PE. Zusätzlich sind aufgedruckte oder angeformte Pfeile vorgesehen, die in Richtung der jeweiligen Aussparung weisen. Bei anderen Ausführungen weist das Oberteil 14 Haltenasen auf, die an entgegengesetzten Endabschnitten angeformt sind und das Anbringen einer Abdeckung ermöglichen. Zusätzlich ist auf dem Oberteil 14 und auf dem Unterteil 1 jeweils eine Artikelnummer angebracht. Das für die Herstellung des Stromschienenhalters verwendete Material ist zur automatisierten Beschriftung mittels eines Lasers geeignet.

Fig. 6 ist eine perspektivische Ansicht und zeigt schematisch Details von zwei Stromschienenhaltern, die umgekehrt angeordnet sind. Eine Linie 21 symbolisiert die Position einer Tragkonstruktion. Bei dem in der oberen Hälfte von Fig. 6 gezeigten Stromschienenhalter ist das Unterteil 1 so auf der Tragkonstruktion befestigt, dass zwischen dem Unterteil 1 und dem Oberteil 14 die flache Ausnehmung 9 für eine Stromschiene gebildet ist. Andererseits ist bei dem in der unteren Hälfte von Fig. 6 gezeigten Stromschienenhalter das Unterteil 1 so an der Tragkonstruktion montiert, dass zwischen dem Unterteil 1 und dem Oberteil 14 die eine größere Höhe aufweisende Ausnehmung 8 gebildet ist. In Fig. 6 erkennt man, dass die Gesamthöhe der unterschiedlich konfigurierten Stromschienenhalter konstant ist, unabhängig davon, wie das Unterteil 1 ausgerichtet ist.

## Patentansprüche

1. Stromschienenhalter (13), der an einer Tragschiene oder an einer Tragkonstruktion (19) befestigbar ist und Ausnehmungen für Stromschienen aufweist, wobei der Stromschienenhalter (13) ein Unterteil (1) und ein Oberteil (14) aufweist, die unter Bildung von Ausnehmungen für Stromschienen (20, 25, 26) miteinander verbindbar sind, **dadurch gekennzeichnet dass** das Unterteil (1) an zwei entgegengesetzten Seiten (2,3) elastisch verformbare Halteabschnitte (4) aufweist, die einerseits in Öffnungen der Tragschiene oder Tragkonstruktion einsteckbar sind und diese im eingesteckten Zustand kraft- und/oder formschlüssig hintergreifen und die andererseits in Öffnungen des Oberteils (14) einsteckbar sind, wobei das Oberteil (14) derart geformt ist, dass es entweder mit einer ersten Seite (2) oder mit einer zweiten Seite (3) auf das Unterteil (1) aufsteckbar ist, wodurch entweder als Durchgangsöffnungen für Stromschienen ausgebildete Ausnehmungen oder Endhalter zum seitlichen Abdecken von Stromschienen (20, 25, 26) gebildet werden.

2. Stromschienenhalter nach Anspruch 1, **dadurch gekennzeichnet, dass** ein elastisch verformbarer Halteabschnitt (4) zwei in entgegengesetzte Richtungen abstehende Zungen (5, 6) aufweist.

3. Stromschienenhalter nach Anspruch 1 oder 2, **dadurch gekennzeichnet, dass** das Unterteil (1) entweder mit der ersten Seite (2) oder mit der zweiten Seite (3) in eine Tragschiene oder eine Tragkonstruktion (19) einsteckbar ist, wobei beim Einstecken der ersten Seite (2) eine Ausnehmung (8) für eine Stromschiene mit einer ersten Höhe und beim Einstecken der zweiten Seite (3) eine Ausnehmung (9) mit einer zweiten Höhe gebildet ist.

4. Stromschienenhalter nach einem der vorangehenden Ansprüche, **dadurch gekennzeichnet, dass** das Oberteil (14) und/oder das Unterteil (1) so geformt sind, dass weitere Ausnehmungen (11, 12, 24) für Stromschienen (25, 26) gebildet sind, die senkrecht zu den bereits erwähnten Ausnehmungen (8, 9) angeordnet sind.

5. Stromschienenhalter nach einem der vorangehenden Ansprüche, **dadurch gekennzeichnet, dass** er wenigstens drei voneinander beabstandete Ausnehmungen (8, 9, 11, 12, 24) für Stromschienen aufweist.

6. Stromschienenhalter nach einem der vorangehenden Ansprüche, **dadurch gekennzeichnet, dass** das Oberteil (14) eine Seitenfläche (18) aufweist, die in der Konfiguration als Endhalter die Ausnehmungen (9) für die Stromschienen (20) abdeckt.

7. Stromschienenhalter nach einem der vorangehenden Ansprüche, **dadurch gekennzeichnet, dass** das Oberteil (14) und das Unterteil (1) übereinstimmende Durchgangslöcher zum Verschrauben des Stromschienenhalters (13) mit der Tragschiene oder der Tragkonstruktion (19) aufweisen.

8. Stromschienenhalter nach einem der vorangehenden Ansprüche, **dadurch gekennzeichnet, dass** das Oberteil (14) Haltenasen zum Anbringen einer Abdeckung aufweist.

9. Stromschienenhalter nach einem der vorangehenden Ansprüche, **dadurch gekennzeichnet, dass** das Oberteil (14) und/oder das Unterteil (1) vorzugsweise an zwei gegenüberliegenden Seiten Aussparungen aufweisen, die eine Aufnahme durch einen Robotergreifer ermöglichen.

## Claims

1. A busbar support (13), which is attachable to a bearing rail or a supporting structure (19), and comprising recesses for busbars, wherein the busbar support (13) comprises a bottom part (1) and a top part (14), which are connectable to each other to form recesses for busbars (20, 25, 26), **characterized in that**
the bottom part (1) comprises retaining sections (4) elastically deformable at two opposite sides (2,3), which, on the one hand, are insertable into openings of the bearing rail or supporting structure, and, in the inserted state, force-fittingly and/or form-fittingly engaging said openings, and which, on the other hand, are insertable into openings of the top part (14), wherein the top part (14) is formed such that it is engageable onto the bottom part (1) either with a first side (2) or with a second side (3), thereby forming either recesses formed as through openings for busbars or end clamps for laterally covering busbars (20, 25, 26).

2. The busbar support according to claim 1, **characterized in that** an elastically deformable retaining section (4) comprises two latches (5, 6) protruding in opposite directions.

3. The busbar support according to claim 1 or 2, **characterized in that** the bottom part (1) is insertable into a bearing rail or a supporting structure (19) either with the first side (2) or with the second side (3), wherein in inserting the first side (2) a recess (8) for a busbar having a first height is formed and in inserting the second side (3) a recess (9) having a second height is formed.

4. The busbar support according to one of the preceding claims, **characterized in that** the top part (14) and/or the bottom part (1) is formed such that other recesses (11, 12,24) for busbars (25, 26) are formed, which are perpendicularly arranged to the already-mentioned recesses (8, 9).

5. The busbar support according to one of the preceding claims, **characterized in that** it comprises at least three recesses (8, 9, 11, 12, 24) spaced apart from each other for busbars.

6. The busbar support according to one of the preceding claims, **characterized in that** the top part (14) comprises a lateral face (18), which, in the configuration as end clamps, covers the recesses (9) for the busbars (20).

7. The busbar support according to one of the preceding claims, **characterized in that** the top part (14) and the bottom part (1) comprise matching through holes for screwing the busbar support (13) to the bearing rail or the supporting structure (19).

8. The busbar support according to one of the preceding claims, **characterized in that** the top part (14) comprises retaining lugs for attaching a cover.

9. The busbar support according to one of the preceding claims, **characterized in that** the top part (14) and/or the bottom part (1) preferably has recesses at two opposite sides enabling uptake by a robot gripper.

## Revendications

1. Support de barre conductrice (13) qui peut être fixé à un rail support ou à une structure porteuse (19) et qui comporte des évidements pour des barres conductrices, en ce que le support de barre conductrice (13) présente une partie inférieure (1) et une partie supérieure (14) qui peuvent être reliées entre elles par formation d'évidements pour des barres conductrices (20, 25, 26), **caractérisé en ce que**
la partie inférieure (1) comporte sur deux côtés opposés (2, 3) des sections de retenue déformables élastiquement (4) qui, d'une part, sont enfichables dans des orifices du rail support ou de la structure porteuse et viennent en prise derrière ces derniers à l'état enfiché par adhérence et/ou par accouplement mécanique et qui, d'autre part, sont enfichables dans des orifices de la partie supérieure (14), **en ce que** la partie supérieure (14) est formée de telle sorte qu'elle peut être emboîtée soit avec un premier côté (2) ou avec un deuxième côté (3) sur la partie inférieure (1), ce qui permet la formation d'évidements réalisés comme orifices de passage pour des barres conductrices ou des supports d'extrémité pour le recouvrement latéral de barres conductrices (20, 25, 26).

2. Support de barre conductrice selon la revendication 1, **caractérisé en ce qu'**une section de retenue déformable élastiquement (4) comporte deux languettes (5, 6) saillantes dans deux directions opposées.

3. Support de barre conductrice selon la revendication 1 ou 2, **caractérisé en ce que** la partie inférieure (1) est enfichable soit avec le premier côté (2) ou avec le deuxième côté (3) dans un rail support ou une structure porteuse (19), un évidement (8) pour une barre conductrice d'une première hauteur étant formé à introduction du premier côté (2) et un évidement (9) d'une deuxième hauteur étant formé à introduction du deuxième côté (3).

4. Support de barre conductrice selon l'une des revendications précédentes, **caractérisé en ce que** la partie supérieure (14) et/ou la partie inférieure (1) sont formées de sorte que d'autres évidements (11, 12, 24) pour des barres conductrices (25, 26) sont formés, lesdits évidements étant disposés perpendiculairement par rapport aux évidements (8, 9) déjà mentionnés.

5. Support de barre conductrice selon l'une des revendications précédentes, **caractérisé en ce qu'**il comporte au moins trois évidements (8, 9, 11, 12, 24) espacés l'un de l'autre pour des barres conductrices.

6. Support de barre conductrice selon l'une des revendications précédentes, **caractérisé en ce que** la partie supérieure (14) présente une face latérale (18) qui, en configuration de support d'extrémité, recouvre les évidements (9) pour les barres conductrices (20).

7. Support de barre conductrice selon l'une des revendications précédentes, **caractérisé en ce que** la partie supérieure (14) et la partie inférieure (1) comportent des trous traversant coïncidant pour visser le support de barre conductrice (13) au rail support ou à la structure porteuse (19).

8. Support de barre conductrice selon l'une des revendications précédentes, **caractérisé en ce que** la partie supérieure (14) comporte des ergots de retenue pour monter un recouvrement.

9. Support de barre conductrice selon l'une des revendications précédentes, **caractérisé en ce que** la partie supérieure (14) et/ou la partie inférieure (1) comportent des découpes de préférence sur deux côtés opposés qui permettent une réception par une pince de robot.
